# EUROPEAN PATENT APPLICATION

(11) **EP 1 956 760 A1**
(43) Date of publication of application: **13.08.2008**
(21) Application number: 08150859.0
(22) Date of filing: 31.01.2008
(51) Int. Cl.: H04L 12/28

(54) **Building management system and a method thereof**

(30) Priority: 08.02.2007 KR 20070013381
(71) Applicant: LG Electronics Inc., Seoul 150-721 (KR)
(72) Inventor: Jung, Hai-Young, Seoul (KR); Youn, Sang-Chul, Seoul (KR); Jeon, Duck-Gu, Seoul (KR)
(74) Representative: Vossius & Partner

(57) **Abstract**

The present invention relates to a building management system and a method thereof, the system including: a building management controller for controlling the building management by integrating power distribution, an air conditioning system, energy management, etc., and a BACnet gateway for transmitting control messages of the multi-type air conditioners which are received through the Internet by converting the message to be compatible with the BACnet protocol. Accordingly, it is capable of facilitating monitoring and controlling of the multi-type air conditioners whenever and wherever by a user by using only an IP address, thereby overcoming the conventional limitation in a communication distance between the BACnet gateway and a local controller.

## Description

The present invention relates to a building management system and a method thereof, and more particularly, to a building management system which is capable of easily monitoring and controlling multi-type air conditioners by using only an IP (Internet Protocol) address whenever and wherever by a user by overcoming a conventional limitation in a communication distance, and a method thereof.

Recently, a building management system that automatically controls a plurality of so-called "multi-type" air conditioners (an air conditioner having a plurality of indoor units connected to one outdoor unit) so as to properly control power consumption of the plurality of air conditioners installed in a building and to provide a user with a pleasant environment has gained demand.

The building management system operates to control power distribution, an air conditioner system, security, energy management, etc. after an integration process. And, the BACnet protocol is a standardized protocol to implement an integrated network of the building management system. And, a BACnet gateway is used for the building management system so as to connect the multi-type air conditioners with vents through the RS-485 protocol. Besides, the BACnet gateway has another function that can respectively check the air conditioners regionally without passing through the building management system. This function has developed to regularly check multi-type air conditioners respectively when initially installing or generating a malfunction on a LonWorks network.

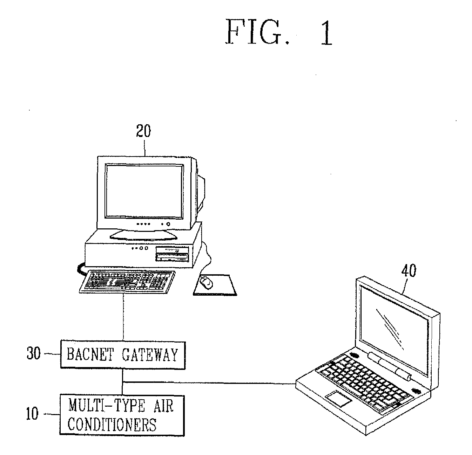

Figure 1 schematically illustrates the structure of a related art building management system.

As shown in the drawing, the related art building management system includes one or more multi-type air conditioners 10 installed in a building, a building management controller 20 for controlling the multi-type air conditioners 10, a BACnet gateway 30 for connecting the air conditioners 10 with the building management controller 20 based on the BACnet protocol (a standardized data communication protocol for building automation and control networks), and a local controller 40 interfacing with the BACnet gateway 30 to regularly check the multi-type air conditioners.

The RS-485 communication scheme is used for the BACnet gateway 30 for connecting the multi-type air conditioners 10 with the building management controller 20, and the RS-232 communication scheme is used for the BACnet gateway 30 for connecting the building management controller 20 with the local controller 40.

After operating of a check program through a computer of a user, the local controller 40 requests updated information regarding the air conditioners by using the RS-232 communication scheme so that the local controller 40 reports and controls the status of the air conditioners by a method that transmits control data to the building management controller 20.

However, the related art building management system has the following problem. That is, because the RS-232 communication scheme used for the BACnet gateway 30 for connecting the building management controller 20 with the local controller 40 has a limitation in a communication distance due to the characteristics of the RS-232 communication scheme, there may be a restriction in the ability to connect the building management controller 20 with the local controller 40 so as to report, control and check the state of the multi-type air conditioners.

Therefore, the present invention is directed to provide a building management system which is capable of easily monitoring and controlling multi-type air conditioners whenever and wherever by a user by using only an IP address by overcoming the conventional limitation in the communication distance, and a method thereof.

To achieve these and other advantages and in accordance with the purpose of the present invention, as embodied and broadly described herein, there is provided a building management system comprising: a multi-type air conditioner system having one or more multi-type air conditioners installed in a building; a building management controller for controlling the multi-type air conditioner system; and a BACnet gateway for transmitting control messages of the multi-type air conditioners which are received through the Internet by converting the control messages to be compatible with the BACnet protocol.

Preferably, the building management system may further comprise a terminal for remotely monitoring the status of and for controlling the multi-type air conditioners through a web browser.

Preferably, the BACnet gateway and the multi-type air conditioners may be connected to each other by an RS-485 communication link.

Preferably, the BACnet gateway may further comprise a web service module that can receive control data of the multi-type air conditioners through the Internet.

Preferably, the web service module may comprise a data extraction unit for periodically receiving data of the multi-type air conditioners, a web page generation unit connected to the data extraction unit so as to display the received data, and a web server for providing a protocol for connecting display information generated at the web page generation unit with the Internet.

In another aspect of the present invention, there is provided a building management method comprising: connecting a management terminal to a web server through the Internet; transmitting, by the management terminal, control massages to the web server; transmitting, by the web server, the received control messages to multi-type air conditioners through a BACnet gateway; and operating the multi-type air conditioners according to the control messages.

Preferably, the control messages may be transmitted by using an RS 485 network of the BACnet gateway.

The foregoing and other objects, features, aspects and advantages of the present invention will become more apparent from the following detailed description of the present invention when taken in conjunction with the accompanying drawings.
Figure 1 schematically illustrates a structure of a related art building management system, and
Figure 2 schematically illustrates a structure of a building management system in accordance with one embodiment of the present invention.

Description will now be given in detail of the preferred embodiments of the present invention, examples of which are illustrated in the accompanying drawings.

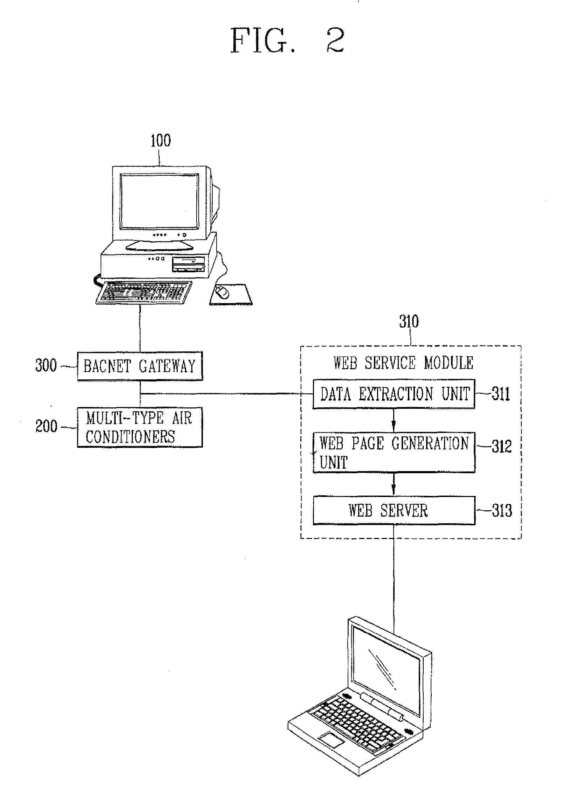

Figure 2 schematically illustrates the structure of a building management system in accordance with one embodiment of the present invention.

As shown in the drawing, the building management system in accordance with one embodiment of the present invention includes: a BACnet gateway connected to one or more air conditioners; and a web service module connected to the BACnet gateway which provides data from the one or more air conditioners to a terminal through the internet. Also, the building management system further comprises a building management controller 100 for controlling the building management by integrating power distribution, an air conditioner system, energy management, etc., wherein the BACnet gateway for transmitting control messages of multi-type air conditioners 200 which are received through the internet by converting the control messages to be compatible with to the BACnet protocol.

The RS-485 communication scheme may be used for the BACnet gateway 300 connecting the building management controller 100 with the multi-type air conditioners 200. And, the web service module 310 that can receive control data of the multi-type air conditioners 200 through the Internet may be installed at the BACnet gateway 300 so as to report upon, control and check the multi-type air conditioners 200.

The web server module 310 may include a data extraction unit 311 for periodically receiving data of the multi-type air conditioners 200, a web page generation unit 312 functionally connected to the data extraction unit so as to display the received data, and a web server 313 for providing a protocol for functionally connecting display information generated at the web page generation unit 312 with the Internet.

The data extraction unit 311 may operate to periodically extract the data of the multi-type air conditioners 200 that is stored in a database. And, the web page generation unit 312 may operate to generate (compose) a web page for displaying the periodically updated data to a user using a web browser.

The web server 313 may operate to provide an HTTP protocol service so as to transfer (serve) the web page generated at the web page generation unit 312 to the user through the internet.

The web service module 310 receives commands which control the one or more air conditioners from the terminal through the internet. Also, the web service module sends the commands to the one or more air conditioners via the BACnet gateway.

With such a configuration, the building management system in accordance with one embodiment of the present invention is operated as follows.

So as to permit monitoring by the building manager, the building management controller 100 controlling the multi-type air conditioners 200 according to check results after receiving a report regarding the status of the multi-type air conditioners 200 and checking the reported state, the manager's terminal may connect to the web server 313 through the Internet, and then transmit a data update request message to the web server 313.

Accordingly, the web server 313 may transmit (serve) an HTML page composed with newly updated data to the manager's terminal, thereby enabling the manager to monitor the status of the multi-type air conditioners 200 through the manager's terminal.

In addition, so as to permit control by the manager of the operation of the multi-type air conditioners 200, if the manager's terminal sends control messages to the web server 313, the web server 313 may transmit the control messages to the multi-type air conditioners 200 over an RS-485 network.

Accordingly, the multi-type air conditioners 200 may be operated according to the received control messages.

A method for managing one or more air conditioners by the building management system according to the present invention includes receiving data from one or more air conditioners via a BACnet gateway, generating a web page which displays the data received from the one or more air conditioners, and transferring the web page to a terminal through the internet. Here, the web page is transferred to the terminal using an HTTP protocol. Here, receiving the data may comprises receiving the data from a database.

Preferably, the method further comprises receiving commands which control the one or more air conditioners from the terminal through the Internet. Also, the method further comprises sending the commands to the one or more air conditioners via the BACnet gateway.

As aforementioned, in accordance with the present invention, there is provided a building management system including: a building management controller 100 for controlling the building management by integrating power distribution, an air conditioning system, energy management, etc., and a BACnet gateway for transmitting control messages of the multi-type air conditioners 200 which are received through the Internet by converting the control messages to be compatible with the BACnet protocol, whereby accordingly, it is capable of facilitating monitoring and controlling of the multi-type air conditioners whenever and wherever by the user by using only an IP address by overcoming the conventional communication distance limitation in the BACnet gateway-local controller link.

As the present inventive features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A building management system, comprising:
a BACnet gateway connected to one or more air conditioners; and
a web service module connected to the BACnet gateway which provides data from the one or more air conditioners to a terminal through the Internet.

2. A building management system according to claim 1, wherein the web service module comprises a data extraction unit that receives the data from the one or more air conditioners.

3. A building management system according to claim 2, wherein the web service module comprises a web page generation unit that generates a web page which displays the data received from the one or more air conditioners.

4. A building management system according to claim 3, wherein the web service module comprises a web server which transfers the web page to the terminal through the Internet using an HTTP protocol.

5. A building management system according to any of claims 2 to 4, wherein the data extraction unit periodically extracts the data from the one or more air conditioners from a database.

6. A building management system according to any of claims 1 to 5, wherein the web service module receives commands which control the one or more air conditioners from the terminal through the Internet.

7. A building management system according to claim 6, wherein the web service module sends the commands to the one or more air conditioners via the BACnet gateway.

8. A method for managing one or more air conditioners, comprising:
receiving data from one or more air conditioners via a BACnet gateway;
generating a web page which displays the data received from the one or more air conditioners; and
transferring the web page to a terminal through the Internet.

9. A method according to claim 8, wherein the web page is transferred to the terminal using an HTTP protocol.

10. A method according to claim 8 or 9, wherein receiving the data comprises receiving the data from a database.

11. A method according to any of claims 8 to 10, further comprising receiving commands which control the one or more air conditioners from the terminal through the Internet.

12. A method according to claim 11, further comprising sending the commands to the one or more air conditioners via the BACnet gateway.
